# EUROPEAN PATENT SPECIFICATION

(11) **EP 2 501 620 B1**
(45) Date of publication and mention of the grant of the patent: **22.07.2015**
(21) Application number: 10779520.5
(22) Date of filing: 09.11.2010
(51) Int. Cl.: B65C 3/06, B65C 9/40, B29C 63/42, B29C 53/44

(54) **METHOD AND DEVICE FOR PRODUCING SLEEVE-LIKE LABELS**
VERFAHREN UND VORRICHTUNG ZUR HERSTELLUNG VON SCHLAUCHARTIGEN ETIKETTEN
PROCÉDÉ ET DISPOSITIF DE FABRICATION D'ÉTIQUETTES DE TYPE MANCHON

(30) Priority: 18.11.2009 IT VR20090194
(43) Date of publication of application: 26.09.2012
(73) Proprietor: Sacmi Verona S.P.A., 40026 Imola (BO) (IT)
(72) Inventor: PEDERCINI, Maurizio, I-46045 Marmirolo (IT); MARASTONI, Daniele, I-40017 San Giovanni In Persiceto (IT)
(74) Representative: Modiano, Micaela Nadia
(86) International application number: PCT/EP2010/067090
(87) International publication number: WO 2011/061091

(56) References cited:
- WO-A1-2007/148189
- DE-A1- 19 716 079
- US-A- 4 976 798
- US-A- 5 443 668
- US-A1- 2007 169 874

## Description

### Technical field

The present invention relates to a method for producing sleeve-like labels and a device for their production.

### Background Art

Typically, sleeve-like or "shrink sleeve" labels are made of polymeric material such as polyethylene terephthalate (PET), polyvinylchloride (PVC), polypropylene (PP), polystyrene (PS), or other materials which are adapted to be heat-shrunk.

By the term sleeve-like or "shrink sleeve" labels, what is meant here is tubular labels made of plastic film which are designed to be fitted over a respective container to be labelled and subsequently heated, so that the labels shrink onto the outer surface of the container and assume the shape of the outer surface of the container itself.

Sleeve-like labels are usually obtained from a film of heat-shrink plastic material which is unrolled from a reel in order to be fed, by means of the use of a movement device, to a transfer drum.

A cutting device then cuts the plastic film transversely to the direction of advancement, so as to obtain portions of plastic film which have a length that is preset as a function of the dimensions of the container to be labelled.

By means of the transfer drum, the portions of film are transferred to a carousel which is provided with a plurality of spindles, suitably arranged on the periphery of the carousel itself, and shaped so as to receive portions of plastic film from the transfer drum in order to obtain respective tubular sleeves.

In more detail, each spindle comprises an outer cylindrical wall which has a determined diameter that is substantially equal to the preset diameter of the label being made, and upon which each portion of plastic film is wound so that a first longitudinal edge of the portion of plastic film is partially overlapping the opposite edge of such portion in an overlap region, so as to form the tubular sleeve.

At the overlap region, the join is normally executed by using suitable sealing techniques so as to obtain a sleeve-like label.

Advantageously, each spindle can be provided with sealing means which are arranged so as to make the relative portion of plastic film adhere to and wind around the cylindrical wall.

For the purposes of example, such sealing means can be constituted by a plurality of holes, formed on the cylindrical wall, through which air is aspirated from outside towards the inside of the spindle.

Each spindle can be, moreover, provided with means for expelling the air, which are designed to favour the detachment of the sleeve-like label from the spindle itself, so as to radially expand the sleeve once the joining operations have been concluded.

Each spindle is generally associated with a support, typically a load plate, which is adapted to receive a container to be labelled, which rests upon such load plate.

Specifically, the sleeve-like label can be placed on the container to be labelled by means of a relative axial movement of the label and the container along the longitudinal axis of the container, so that the sleeve-like label is fitted over the container.

This operation can be implemented by keeping, for example, the label still and moving the container or, more commonly, by keeping the container still and pushing the sleeve-like label from above or from below in order to bring it to fit around the container.

The container and the "shrink sleeve" label associated with it are then brought to a heating station where the label is subjected to a heat treatment that is such as to cause its shrinkage owing to a thermal effect and, therefore, the close adhesion to the lateral surface of the respective container.

WO 2007/148189 discloses a method and a device for producing a sleeve-like label.

A drawback of the sleeve-like labels used nowadays consists in the fact that the connecting portion or seal between the overlapping edges of the label wound around the spindle is normally executed in an intermediate position with respect to the overlap region.

Consequently, this determines the creation of a free flap, which is formed between the connecting line and the free edge of the label which faces outwards, and which, during the subsequent heat-shrinking step, not being fixed to the remaining part of the sleeve-like label, will not adhere closely to the container on which it is fitted, with evident problems from an aesthetic viewpoint.

In particular, the free flap of plastic material substantially assumes the shape of a tab which can be easily caught during the subsequent steps of moving the sleeve-like label from the spindle to the container to be labelled.

Moreover, the free flap of plastic material, as a result of the heat-shrinking process to which the label fitted over the container is subjected in order to favour the adhesion of the label to the lateral surface of such container, forms a ridge which projects transversally with respect to the lateral surface of the container and, in general, such ridge has an outer edge that is curled and/or hardened by the heat-shrinking process.

The presence of the ridge enormously compromises the aesthetic appearance of the packaging thus obtained.

Moreover, the ridge can also be caught and/or pulled in order to interfere with and/or damage the label thus leading to a decrease in the quality of the packaging and its enjoyment by a hypothetical user.

Such drawback is particularly accentuated for some heat-shrinkable materials, for which the formation of the ridges during the heat-shrinking process is more evident.

### Disclosure of the Invention

The aim of the present invention is to eliminate, or at least to drastically reduce, the above mentioned drawbacks in known sleeve-like labels.

Within this aim, an object of the invention is to obtain sleeve-like labels which adhere in a homogeneous and long-lasting manner to the container with which they are associated.

Another object of the invention is to provide sleeve-like labels which are free from areas which protrude with respect to a lateral surface of the container.

Another object of the invention is to provide sleeve-like labels that are free from tabs which can be easily grasped or caught, thus damaging the labels.

This aim, as well as these and other objects which will become better evident hereinafter, are achieved by a method for producing sleeve-like labels comprising:
- a step of unwinding a supply reel of heat-shrink film, which comprises a plurality of pre-pasted portions which are distributed discretely along the unwinding direction of said supply reel;
- a step of separating at least one band of film from said supply reel, said band of film comprising at least one of said pre-pasted portions;
- a step of feeding said band of heat-shrink film to a forming spindle;
- a step of wrapping said band of heat-shrink film around said forming spindle, a region of overlap being provided between a first longitudinal end of said band of heat-shrink film in contact with said forming spindle and the second longitudinal end of said band of heat-shrink film, said pre-pasted portion being arranged at least partially at a portion of said overlap region;
- a step of transferring said sleeve-like label formed on said forming spindle from said forming spindle to a container to be labelled.

According to another aspect, the present invention provides a device for producing a sleeve-like label, characterized in that it comprises at least one supply reel supplying at least one forming spindle with a band of heat-shrink film that has at least one pre-pasted portion, separating means (14) for separating at least one band of heat-shrink film (5) from said supply reel (3), wrapping means being provided for wrapping said band of heat-shrink film around the lateral surface of said spindle, said wrapping means providing a region of overlap between a first longitudinal end of said band of heat-shrink film in contact with said forming spindle and the second longitudinal end of said band of heat-shrink film, said pre-pasted portion being arranged at least partially at a portion of said overlap region, transferring means for transferring said sleeve-like label formed around said forming spindle (4) from said forming spindle to a container to be labelled.

### Brief description of the drawings

Further characteristics and advantages of the invention will become better apparent from the following detailed description of some preferred, but not exclusive, embodiments of a device for producing sleeve-like labels, and of the associated production method, according to the invention, illustrated by way of non-limiting example in the accompanying drawings, wherein:
Figure 1 is a schematic view of a device for producing a sleeve-like label which can be associated with a carousel-type device for feeding containers to be labelled;
Figure 2 is an enlarged scale schematic view of the means for wrapping the band of heat-shrink film around the lateral surface of the forming spindles;
Figure 3 is an enlarged scale top view of a band of film wrapped around the lateral surface of a respective forming spindle;

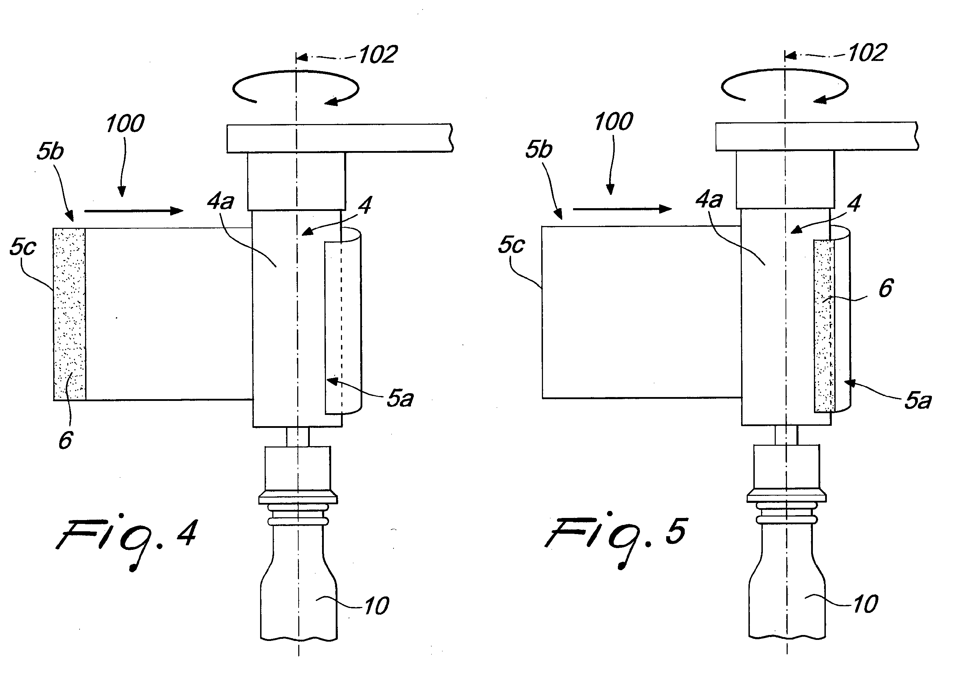

Figure 4 is a side view showing the step of wrapping a band of heat-shrink film around a respective forming spindle;
Figure 5 is a view similar to Figure 4 of another embodiment of the band of heat-shrink film;

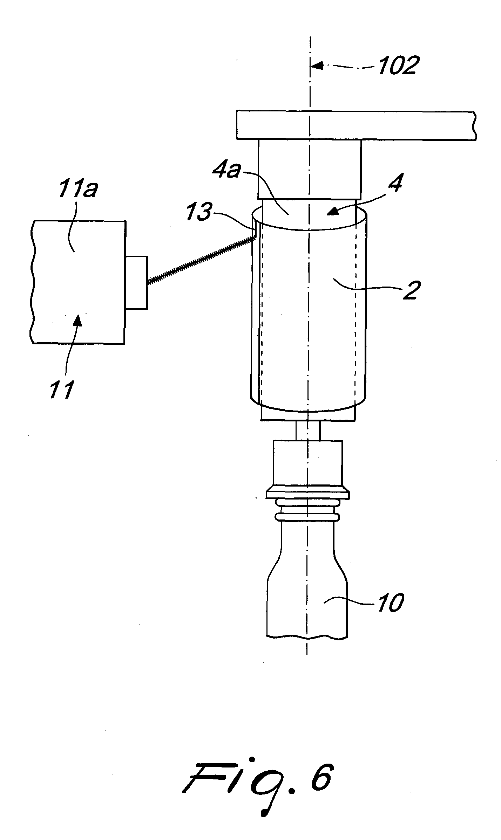

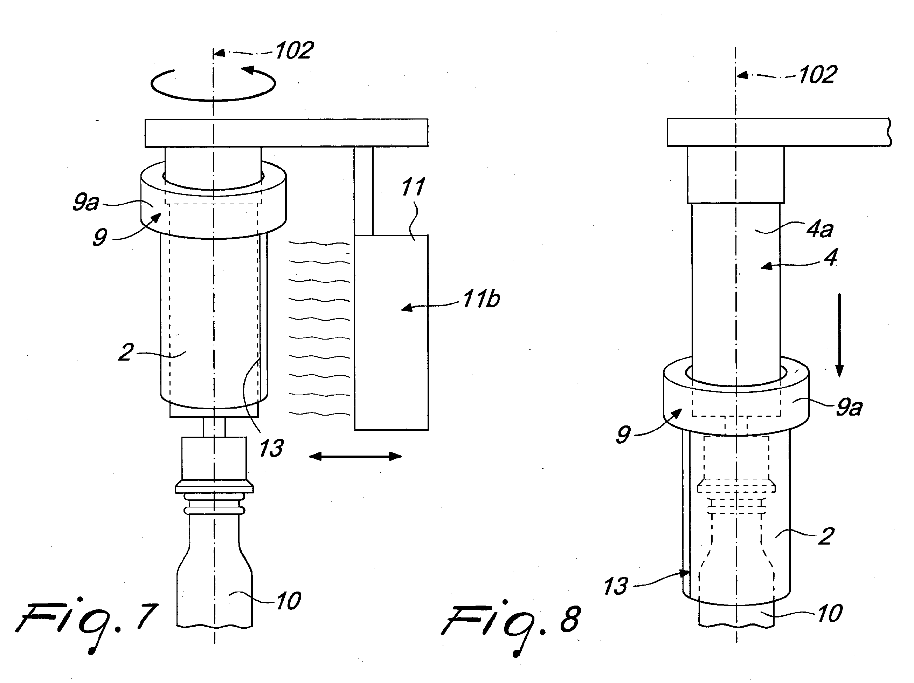

Figures 6 and 7 show, again in a side view, the step of sealing the first longitudinal end to the second longitudinal end;
Figure 8 shows, in a side view, the step of transferring the sleeve-like label from the forming spindle to the container to be labelled;
Figure 9 is a view similar to Figure 2 of another possible embodiment of the device for producing a sleeve-like label;
Figure 10 is a view of a further embodiment of the device for producing a sleeve-like label according to the invention.

### Ways of carrying out the Invention

With reference to the figures, a device, indicated generally with the reference numeral 1, for producing a sleeve-like label 2 comprises at least one supply reel 3 which is designed to feed at least one forming spindle 4 with a band of heat-shrink film 5. In particular, the band of heat-shrink film 5 has at least one pre-pasted portion 6.

The device 1 has, moreover, means 7 for wrapping the band, or each band, of heat-shrink film 5 around the lateral surface 4a of a respective forming spindle 4, which are designed to provide a region of overlap 8 between a first longitudinal end 5a of the band of heat-shrink film 5 which is intended to be brought into contact with the lateral surface 4a of the forming spindle 4 and the second longitudinal end 5b of the band of heat-shrink film 5.

According to a distinctive characteristic of the present invention, the pre-pasted portion 6 is arranged at least partially at a portion of the overlap region 8.

The device 1 has, moreover, means 9 for transferring the sleeve-like label 2 formed around the forming spindle 4 from the forming spindle 4 to a container 10 to be labelled.

Advantageously, the device 1 has presser means 30 which are designed to engage against the outer surface of the sleeve-like label 2 which is wrapped around the forming spindle 4 in order to allow optimum adhesion between the first longitudinal end 5a and the second longitudinal end 5b thanks to the action of the pre-pasted portion 6 which is arranged at the overlap region 8.

Purely for the purposes of example, the presser means 30 can be constituted by idle rubberised rollers or by brushes 31 which are arranged parallel to the direction of movement of the forming spindle 4.

According to a particularly important aspect of the present invention, the device 1 is associated with a device 11 for sealing the first longitudinal end 5a to the second longitudinal end 5b of the band of heat-shrink film 5 which is wrapped around the respective forming spindle 4 in order to provide a connecting portion 13 that lies transversely with respect to the direction of longitudinal extension 100 of the band of heat-shrink film 5 and at the overlap region 8.

The sealing device 11 can be implemented in various ways. Purely for the purposes of example, the sealing device 11 can be constituted by sealing means selected from the group that comprises:
- a laser sealing device 11a;
- an infrared sealing device;
- a sealing bar-type sealing device 11b;
- an ultrasonic sealing device.

Advantageously, the device 1 has, between the supply reel 3 and the wrapping means 7, cutting means 14, which are designed to slice a continuous film 15 of polymeric heat-shrink material which is unwound from the supply reel 3 in order to make the bands of film 5.

The cutting means 14 are, in particular, adapted to execute the cutting of the continuous film 15 of heat-shrink material unwound from the supply reel 3 proximate to respective pre-pasted portions 6.

In more specific detail, the device 1 is provided with means 16 for feeding the bands of film 5 to the wrapping means 7 and, consequently, to the forming spindles 4.

According to a preferred embodiment, the feeder means 16 can be implemented by means of an element for unwinding that is constituted, for example, by a transfer drum 18 from which the supply reel 3 of the continuous film 15 is unwound.

Advisably, the feeder means 16 also comprise the cutting means 14, which, as previously explained, are designed to slice the continuous film 15 unwound from the supply reel 3 in order to make the bands of heat-shrink film 5 that are subsequently used to form the sleeve-like labels 2.

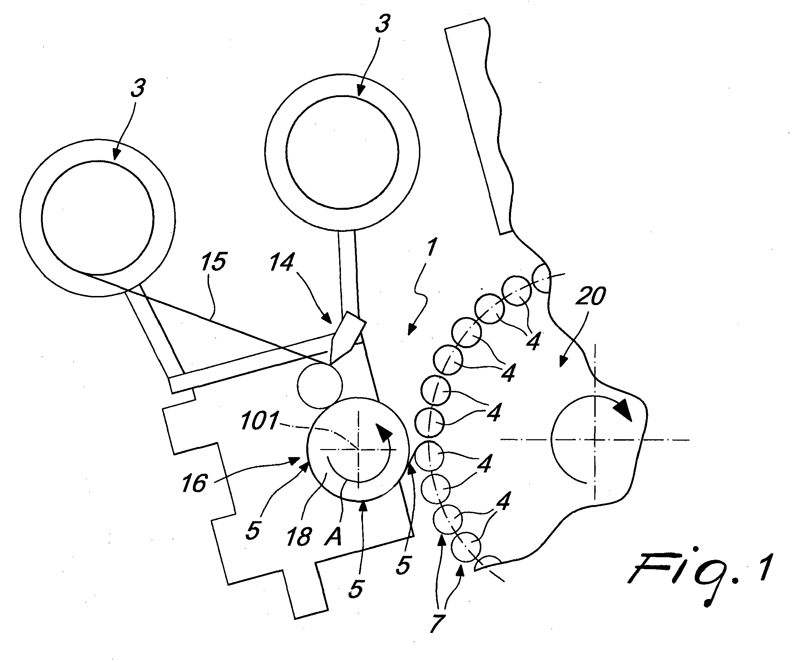

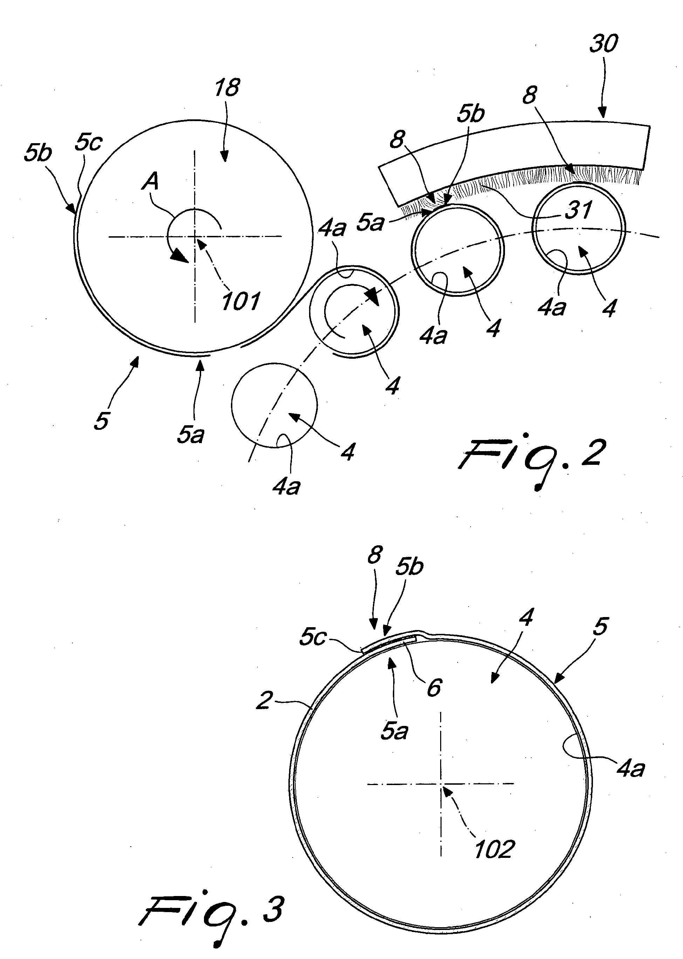

As shown in Figures 1 and 2, the transfer drum 18 is rotatable about a respective axis of movement 101 according to a direction of rotation which is indicated with the letter A.

According to a practical embodiment, the transfer drum 18 has, in a per se known manner, a cylindrical lateral wall on which a plurality of holes are formed that are connected to a pneumatic device that is adapted to aspire air into the transfer drum 18, or to expel air from the transfer drum 18, through such holes, as a function of the angular position assumed by such holes, during the rotation of the transfer drum 18, with respect to the axis of movement 101.

In practice, by means of the aspiration of air through the holes it is possible to keep the bands of heat-shrink film 5, obtained one at a time by virtue of the cutting means 14, in adherence to the cylindrical lateral wall of the transfer drum 18 and, by means of the expulsion of air from the transfer drum 18, it is instead possible to detach the bands of heat-shrink film 5 from the cylindrical lateral wall of the transfer drum 18 in order to allow them to be brought on the respective wrapping means 7 (which are typically constituted by the forming spindles 4 themselves) which are located downstream of the transfer drum 18 and which are arranged, in the embodiment shown, along the peripheral region of a carousel 20, above the containers to be labelled 10.

The forming spindle or spindles 4 that constitute the wrapping means 7 are oriented, with the respective axes 102, substantially parallel to the axis of movement 101 of the transfer drum 18 and are engageable, on their lateral surface 4a, by the band of heat-shrink film 5 which is made available one at a time by the transfer drum 18 when, by rotating around the carousel 20, they are brought into a position facing the transfer drum 1 8.

Furthermore, the forming spindles 4 are actuated so as to rotate, about the associated axis 102, in order to wrap, around their lateral surface 4a, the bands of heat-shrink film 5 taken from the transfer drum 18.

In order to ensure an optimal adherence of the bands of heat-shrink film 5 on the lateral surface 4a of the forming spindles 4, there are means for aspiration of air through a plurality of openings formed on the lateral surface 4a of the forming spindles 4.

The means 9 for transferring the sleeve-like label 2 formed by the forming spindle 4 to a container to be labelled 10 can be, for example, constituted by a thrust ring 9a which is moved coaxially towards the respective forming spindle 4 in order to push the sleeve-like label 2 which is wrapped around it towards the container to be labelled 10 which is positioned, in the embodiment shown, below the forming spindle 4.

To facilitate this operation, it is advisable to interrupt the action of the aspiration means acting on the forming spindle 4 and to activate means of expulsion of air from its openings located on its lateral surface 4 a, so as to obtain a detachment of the sleeve-like label 2 from the lateral surface 4a of the forming spindle 4 over which it is fitted.

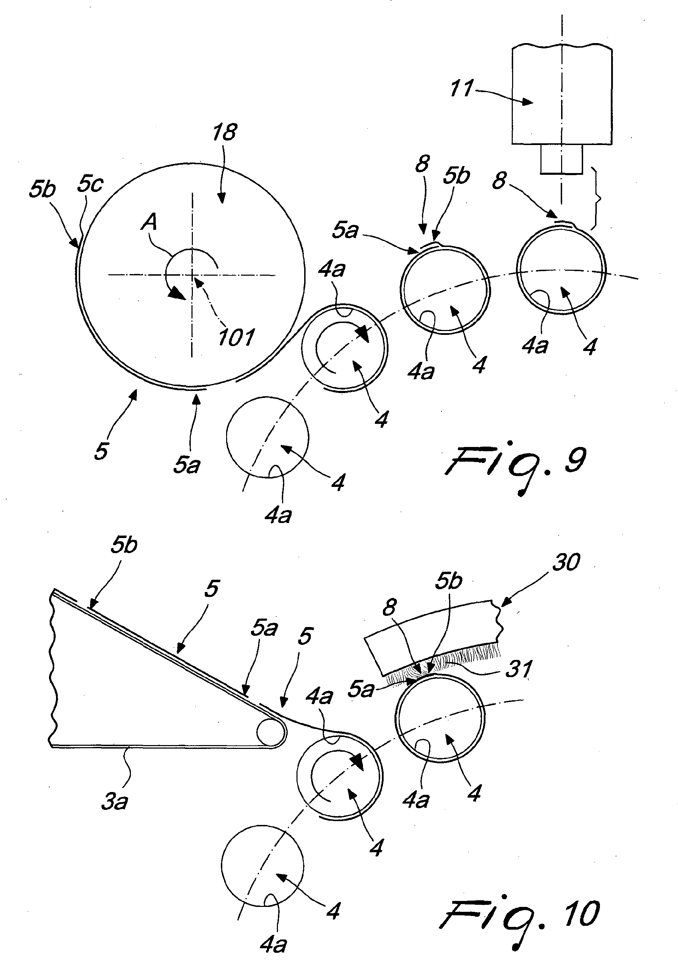

There is no reason why the supply reel 3 should not be constituted by a "single use" supporting body 3a which is substantially longitudinal and on one face of which a plurality of bands of heat-shrink film 5 is applied. In this case, the supply means can be implemented by a separator device which is adapted to detach, in sequence, the bands of heat-shrink film 5 from the supporting body 3a in order to feed them directly to the forming spindles 4 as shown in Figure 9.

In this specific case, the bands of heat-shrink film 5 can be kept applied to the supporting body 3a thanks to the presence, at one of its ends, of the pre-pasted portion 6 and, at the other of its ends, thanks to the action of an adhesive element which is designed to remain anchored, after the detachment, to the supporting body 3a in order to avoid "soiling" the lateral surface 4a of the forming spindle 4.

Advantageously, the pre-pasted portion 6 comprises a pre-pasted strip which runs transversely with respect to the direction of longitudinal extension 100 of the band of heat-shrink film 5 and which extends, once the band of heat-shrink film 5 has been wrapped around the forming spindle 4, at least to the overlap region 8 and, in particular, at least between the connecting portion 13 and the free edge 5c of the second longitudinal end 5b.

Obviously, there is no reason why the forming spindle 4, or possibly other types of wrapping means which perform the same function, cannot be arranged below the container to be labelled 10.

According to another aspect, the present invention relates to a method for producing sleeve-like labels 2, comprising:
- a step of unwinding a supply reel 3 of heat-shrink film, which comprises a plurality of pre-pasted portions 6 which are distributed discretely along the direction of unwinding 100 of the supply reel 3;
- a step of separating at least one band of heat-shrink film 5 from the supply reel 3, the band of heat-shrink film 5· comprising at least one pre-pasted portion 6;
- a step of feeding the band of heat-shrink film 5 to a forming spindle 4;
- a step of wrapping the band of heat-shrink film 5 around the forming spindle 4 in order to make a sleeve-like label 2, a region of overlap 8 being provided between a first longitudinal end 5a of the band of heat-shrink film 5 in contact with the forming spindle 4 and the second longitudinal end 5b of the band of heat-shrink film 5, the pre-pasted portion 6 being arranged at least partially at a portion of the overlap region 8;
- a step of transferring the sleeve-like label 2 formed around the respective forming spindle 4 from the forming spindle 4 to a container to be labelled 10.

In particular, it is possible for the pre-pasted portion 6 to be arranged on the face of the first longitudinal end 5a which is designed to be facing outwards with respect to the forming spindle 4 or, more preferably, on the face of the second longitudinal end 5b which is designed to be brought against the first longitudinal end 5a so as to achieve a stable connection between the free edge 5c of the second longitudinal end 5b and the first longitudinal end 5 a.

Advisably, downstream of the step of wrapping the band of heat-shrink film 5 around the forming spindle 4, there is a step which consists in pressing the second longitudinal end 5b against the first longitudinal end 5a so as to optimise the adhesion between the two ends 5a, 5b at the overlap region 8 thanks to the presence of the pre-pasted portion 6.

This step can be, for example, obtained by using presser means 30, which are designed to engage against the outer surface of the sleeve-like label 2 which is wrapped around the forming spindle 4 in order to allow an optimum adhesion between the first longitudinal end 5a and the second longitudinal end 5 b.

In this regard, the presser means 30 can be constituted by idle rubberised rollers or by brushes 31 which are arranged parallel to the direction of movement of the forming spindle 4.

A distinctive characteristic of the present method consists in providing a step of sealing the first longitudinal end 5a to the second longitudinal end 5b of the band of heat-shrink film 5 which is wrapped around the forming spindle 4 in order to provide a connecting portion 13 that lies transversely with respect to the direction of longitudinal extension 100 of the band of heat-shrink film 5 and arranged at the overlap region 8.

For the purposes of example, the step of sealing comprises laser sealing, infrared sealing, sealing bar-type sealing or an ultrasonic sealing device.

According to a first embodiment, the step of separating the band of heat-shrink film 5 from the supply reel 3 comprises a step of cutting a continuous film 15 unwound from the supply reel 3 and the subsequent step of transferring the bands of heat-shrink film 5 thus obtained to the wrapping means 7.

In particular, the cutting step is performed at cutting regions provided on the continuous fllm 15 unwound from the supply reel 3 proximate to respective pre-pasted portions 6, so that the band or each band of heat-shrink film 5 separated from the supply reel 3 comprises at least one pre-pasted portion 6 at a longitudinal end 5a, 5 b and up to the free edge 5c of the aforementioned longitudinal end 5a, 5b.

Alternatively, the step of separating the band of heat-shrink film 5 from the supply reel 3 comprises a step of detaching the band of heat-shrink film 5 from a continuous supporting body being unwound from the supply reel 3.

The pre-pasted portion 6 is obtained before the unwinding of the continuous film 15, or before the depositing of the bands of heat-shrink film 5 on the "single use" supporting body 3 a, by means of a step of spreading aqueous emulsions of adhesives, preferably aqueous emulsions of acrylic polymers.

Advantageously, the viscosity of the aqueous emulsions of adhesives used is comprised between 50 and 1000 cP, preferably between 100 and 500 cP at an application temperature comprised between 0°C and 60°C, preferably between 20°C and 40°C.

In practice it has been found that in all the embodiments the invention is capable of fully achieving the set aim and objects.

In particular, the pre-pasted portion 6 makes it possible to stably connect, during the wrapping of the band of heat-shrink film 5 onto the forming spindle 4, the first longitudinal end 5a to the second longitudinal end 5b, thus ensuring a sufficient hold of the join even during the subsequent step of heat-shrinking because the join is performed along all of the overlap region.

If it is considered desirable to also carry out a sealing between the first longitudinal end 5a and the second longitudinal end 5b, it has been observed that the presence of the pre-pasted portion at the overlap region, and in particular between the connecting portion 13 and the free edge 5c of the second longitudinal end 5b, makes possible a close adhesion of all of the second longitudinal end 5b to the container 10 even during the step of heat-shrinking, and hence a complete adherence of the sleeve-like labels 2 to the containers 10.

It has therefore been found that by using the method and the device described above, labels are obtained which are free from protruding ridges or edges that are not perfectly fixed to the label itself.

Therefore, the labels thus obtained have an aesthetic appearance which is considerably improved over that of known labels.

The invention conceived is susceptible of numerous modifications and variations, all of which are within the scope of the appended claims.

## Claims

1. A method for producing sleeve-like labels (2), comprising:
- a step of unwinding a supply reel (3) of heat-shrink film, which comprises a plurality of pre-pasted portions (6) which are distributed discretely along the unwinding direction of said supply reel (3);
- a step of separating at least one band of heat-shrink film (5) from said supply reel (3), said band of heat-shrink film (5) comprising at least one of said pre-pasted portions (6);
- a step of feeding said band of heat-shrink film (5) to a forming spindle (4);
- a step of wrapping said band of heat-shrink film (5) around said forming spindle (4) in order to provide a sleeve-like label (2), a region of overlap (8) being provided between a first longitudinal end (5a) of said band of heat-shrink film (5) in contact with said forming spindle (4) and the second longitudinal end (5b) of said band of heat-shrink film (5), said pre-pasted portion (6) being arranged at least partially at a portion of said overlap region (8);
- a step of transferring said sleeve-like label (2) formed around said forming spindle (4) from said forming spindle (4) to a container to be labelled (10).

2. The method for producing sleeve-like labels (2) according to claim 1, **characterized in that** it comprises a step of sealing said first longitudinal end (5a) to said second longitudinal end (5b) of said band of heat-shrink film (5) wrapped around said forming spindle (4) to provide a connecting portion (13) that lies transversely to the direction of longitudinal extension (100) of said band of heat-shrink film (5) and at said overlap region (8).

3. The method for producing sleeve-like labels (2) according to claim 2, **characterized in that** said sealing step comprises laser sealing, infrared sealing, sealing bar-type sealing, an ultrasonic sealing device.

4. The method for producing sleeve-like labels (2) according to one or more of the preceding claims, **characterized in that** it comprises, after said step of wrapping the band of heat-shrink film (5) around the forming spindle (4), a step of pressing said second longitudinal end (5b) against the first longitudinal end (5a) in order to optimize the adhesion between the two ends (5a, 5b) at said overlap region (8).

5. The method for producing sleeve-like labels (2) according to one or more of the preceding claims, **characterized in that** said step of separating said band of heat-shrink film (5) from said supply reel (3) comprises a step of cutting a continuous film (15) unwound from said supply reel (3).

6. The method for producing sleeve-like labels (2) according to claim 5, **characterized in that** said cutting step is performed at cutting regions provided on said continuous film (15) unwound from said supply reel (3) proximate to respective pre-pasted portions (6), so that said band of heat-shrink film (5) separated from said supply reel (3) comprises said pre-pasted portion (6) at a longitudinal end (5a, 5b) and up to the free edge (5c) of said longitudinal end (5a, 5b).

7. The method for producing sleeve-like labels (2) according to one or more of the preceding claims, **characterized in that** said step of separating said band of heat-shrink film (5) from said supply reel (3) comprises a step of separating said band of heat-shrink film (5) from a continuous supporting body (3a) unwound from said supply reel (3).

8. The method for producing sleeve-like labels (2) according to one or more of the preceding claims, **characterized in that** said pre-pasted portion (6) is obtained prior to the unwinding of said continuous film (15) or of said bands of heat-shrink film (5) supported by said continuous supporting body (3a) on said supply reel (3) by spreading aqueous emulsions of adhesives, preferably aqueous emulsions of acrylic polymers.

9. The method for producing sleeve-like labels (2) according to claim 8, **characterized in that** the viscosity of said aqueous emulsions of adhesives is comprised between 50 and 1000 cP, preferably between 100 and 500 cP at an application temperature comprised between 0°C and 60°C, preferably between 20°C and 40°C.

10. A device (1) for producing a sleeve-like label (2), **characterized in that** it comprises at least one supply reel (3) supplying at least one forming spindle (4) with a band of heat-shrink film (5) that has at least one pre-pasted portion (6), separating means (14) for separating at least one band of heat shrink film (5) from said supply reel (3), wrapping means (7) for wrapping said band of heat-shrink film (5) around the lateral surface (4a) of said forming spindle (4) in order to provide a sleeve-like label, said wrapping means providing a region of overlap (8) between a first longitudinal end (5a) of said band of heat-shrink film (5) in contact with said forming spindle (4) and the second longitudinal end (5b) of said band of heat-shrink film (5), said pre-pasted portion (6) being arranged at least partially at a portion of said overlap region (8), transferring means (9) for transferring said sleeve-like label (2) formed around said forming spindle (4) from said forming spindle (4) to a container to be labelled (10).

11. The device (1) for producing a sleeve-like label (2) according to claim 10, **characterized in that** it comprises a device (11) for sealing said first longitudinal end (5a) with said second longitudinal end (5b) of said band of heat-shrink film (5) wrapped around said forming spindle (4) to provide a connecting portion (13) that lies transversely to the direction of longitudinal extension (100) of said band of heat-shrink film (5) and at said overlap region (8).

12. The device (1) for producing a sleeve-like label (2) according to one or more of claims 10 to 11, **characterized in that** said sealing device (11) comprises sealing means chosen within the group comprising:
- a laser sealing device (11a);
- an infrared sealing device;
- a sealing bar-type sealing device (11b);
- an ultrasonic sealing device.

13. The device (1) for producing a sleeve-like label (2) according to one or more of claims 10 to 12, **characterized in that** it comprises presser means (30) designed to engage against the outer surface of said sleeve-like label (2) wrapped around the respective forming spindle (4) in order to allow optimum adhesion between the first longitudinal end (5a) and the second longitudinal end (5b).

14. The device (1) for producing a sleeve-like label (2) according to one or more of claims 10 to 13, **characterized in that** it comprises, between said at least one supply reel (3) and said wrapping means (7), cutting means (14) for cutting a continuous film (15) of heat-shrink material unwound from said supply reel (3) into bands of heat-shrink film (5), said cutting means (14) being adapted to cut said continuous film (15) of heat-shrink material unwound from said supply reel (3) proximate to respective pre-pasted portions (6).

15. The device (1) for producing a sleeve-like label (2) according to one or more of claims 10 to 14, **characterized in that** said pre-pasted portion (6) comprises a pre-pasted strip that lies transversely to the direction of longitudinal extension (100) of said band of heat-shrink film (5) and lies in said region of overlap (8) at least between said connecting portion (13) and the free edge (5c) of said second longitudinal end (5b).

16. The device (1) for producing a sleeve-like label (2) according to one or more of claims 10 to 15, **characterized in that** it comprises a supporting frame for a carousel (20) designed to support said containers to be labelled (10), peripherally to said carousel (20) a plurality of forming spindles (4) being provided, adapted to transfer a respective sleeve-like label (2) onto the outer surface of a container to be labelled (10).

## Patentansprüche

1. Ein Verfahren zur Herstellung schlauchartiger Etiketten (2), umfassend:
- einen Schritt zum Abwickeln einer Abwickelspule (3) von einer Wärmeschrumpffolie, die eine Vielzahl im Voraus geleimter Abschnitte (6) umfasst, welche getrennt entlang der Abwickelrichtung der Abwickelspule (3) verteilt sind,
- einen Schritt zum Trennen mindestens eines Bandes der Wärmeschrumpffolie (5) von der Abwickelspule (3), wobei das Band der Wärmeschrumpffolie (5) mindestens einen der im Voraus geleimten Abschnitte (6) umfasst,
- einen Schritt zum Zuführen des Bandes der Wärmeschrumpffolie (5) an eine Formspindel (4),
- einen Schritt zum Wickeln des Bandes der Wärmeschrumpffolie (5) um die Formspindel (4), um ein schlauchartiges Etikett (2) bereitzustellen, wobei ein Überlappungsbereich (8) zwischen einem ersten länglichen Ende (5a) des Bandes der Wärmeschrumpffolie (5), die in Kontakt mit der Formspindel (4) ist, und dem zweiten länglichen Ende (5b) des Bandes der Wärmeschrumpffolie (5) bereitgestellt ist und der im Voraus geleimte Abschnitt (6) zumindest teilweise an einem Abschnitt des Überlappungsbereichs (8) angeordnet ist,
- einen Schritt zum Übertragen des schlauchartigen Etiketts (2), das um die Formspindel (4) herum geformt ist, von der Formspindel (4) an einen zu etikettierenden Behälter (10).

2. Das Verfahren zur Herstellung schlauchartiger Etiketten (2) gemäß Anspruch 1, **dadurch gekennzeichnet, dass** es einen Schritt der Versiegelung des ersten länglichen Endes (5a) mit dem zweiten länglichen Ende (5b) des Bandes der Wärmeschrumpffolie (5) umfasst, die um die Formspindel (4) gewickelt ist, um einen Verbindungsabschnitt (13) bereitzustellen, der quer zur Richtung der Längsausdehnung (100) des Bandes der Wärmeschrumpffolie (5) und am Überlappungsbereich (8) angeordnet ist.

3. Das Verfahren zur Herstellung schlauchartiger Etiketten (2) gemäß Anspruch 2, **dadurch gekennzeichnet, dass** der Schritt der Versiegelung eine Laser-Versiegelung, Infrarot-Versiegelung, eine Versiegelung des Typs mit Siegelstangen, eine Ultraschall-Versiegelungsvorrichtung umfasst.

4. Das Verfahren zur Herstellung schlauchartiger Etiketten (2) gemäß einem oder mehreren der obigen Ansprüche, **dadurch gekennzeichnet, dass** es, nach dem Schritt des Wickelns des Bandes der Wärmeschrumpffolie (5) um die Formspindel (4), einen Schritt des Pressens des zweiten länglichen Endes (5b) gegen das erste längliche Ende (5a), um die Haftung zwischen den beiden Enden (5a, 5b) in dem Überlappungsbereich (8) zu optimieren, umfasst.

5. Das Verfahren zur Herstellung schlauchartiger Etiketten (2) gemäß einem oder mehreren der obigen Ansprüche, **dadurch gekennzeichnet, dass** der Schritt des Trennens des Bandes der Wärmeschrumpffolie (5) von der Abwickelspule (3) einen Schritt des Schneidens eines Endlosfilms (15) umfasst, der von der Abwickelspule (3) abgewickelt ist.

6. Das Verfahren zur Herstellung schlauchartiger Etiketten (2) gemäß Anspruch 5, **dadurch gekennzeichnet, dass** der Schneideschritt in Schneidebereichen durchgeführt wird, die auf dem Endlosfilm (15), der von der Abwickelspule (3) abgewickelt ist, nahe entsprechenden im Voraus geleimten Abschnitten (6) angebracht sind, so dass das Band der Wärmeschrumpffolie (5), das von der Abwickelspule (3) getrennt ist, den im Voraus geleimten Abschnitt (6) an einem länglichen Ende (5a, 5b) und bis zu der freien Kante (5c) des länglichen Endes (5a, 5b) umfasst.

7. Das Verfahren zur Herstellung schlauchartiger Etiketten (2) gemäß einem oder mehreren der obigen Ansprüche, **dadurch gekennzeichnet, dass** der Schritt des Trennens des Bandes der Wärmeschrumpffolie (5) von der Abwickelspule (3) einen Schritt des Trennens des Bandes der Wärmeschrumpffolie (5) von einem durchgehenden Trägerkörper (3a) umfasst, der von der Abwickelspule (3) abgewickelt wird.

8. Das Verfahren zur Herstellung schlauchartiger Etiketten (2) gemäß einem oder mehreren der obigen Ansprüche, **dadurch gekennzeichnet, dass** der im Voraus geleimte Abschnitt (6) vor dem Abwickeln des Endlosfilms (15) oder der Bänder der Wärmeschrumpffolie (5) gewonnen wird, die von dem durchgehenden Trägerkörper (3a) auf der Abwickelspule (3) getragen werden, durch Aufstreichen wässeriger Emulsionen von Klebstoffen, vorzugsweise wässeriger Emulsionen von Acrylpolymeren.

9. Das Verfahren zur Herstellung schlauchartiger Etiketten (2) gemäß Anspruch 8, **dadurch gekennzeichnet, dass** die Viskosität der wässerigen Emulsionen von Klebstoffen zwischen 50 und 1000 cP, vorzugsweise zwischen 100 und 500 cP, bei einer Auftragtemperatur beträgt, die zwischen 0°C und 60°C, vorzugsweise zwischen 20°C und 40°C, liegt.

10. Eine Vorrichtung (1) zur Herstellung eines schlauchartigen Etiketts (2), **dadurch gekennzeichnet**, umfassend:
mindestens eine Abwickelspule (3), die mindestens eine Formspindel (4) mit einem Band Wärmeschrumpffolie (5) versorgt, das mindestens einen im Voraus geleimten Abschnitt (6) aufweist,
ein Abtrennmittel (14) zum Abtrennen mindestens eines Bandes der Wärmeschrumpffolie (5) von der Abwickelspule (3),
Einwickelmittel (7) zum Wickeln des Bandes der Wärmeschrumpffolie (5) um die seitliche Oberfläche (4a) der Formspindel (4), um ein schlauchartiges Etikett bereitzustellen,
wobei das Einwickelmittel einen Überlappungsbereich (8) zwischen einem ersten länglichen Ende (5a) des Bandes der Wärmeschrumpffolie (5), das in Kontakt mit der Formspindel (4) ist, und dem zweiten länglichen Ende (5b) des Bandes der Wärmeschrumpffolie (5) bereitstellt,
wobei der im Voraus geleimte Abschnitt (6) zumindest teilweise an einem Abschnitt des Überlappungsbereichs (8) angeordnet ist, und
ein Übertragungsmittel (9) zur Übertragung des schlauchartigen Etiketts (2), das um die Formspindel (4) herum geformt ist, von der Formspindel (4) an einen zu etikettierenden Behälter (10).

11. Die Vorrichtung (1) zur Herstellung eines schlauchartigen Etiketts (2) gemäß Anspruch 10, **dadurch gekennzeichnet, dass** sie eine Vorrichtung (11) zur Versiegelung des ersten länglichen Endes (5a) mit dem zweiten länglichen Ende (5b) des Bandes der Wärmeschrumpffolie (5) umfasst, das um die Formspindel (4) gewickelt ist, um einen Verbindungsabschnitt (13) bereitzustellen, der quer zur Richtung der Längsausdehnung (100) des Bandes der Wärmeschrumpffolie (5) und an dem Überlappungsbereich (8) angeordnet ist.

12. Die Vorrichtung (1) zur Herstellung eines schlauchartigen Etiketts (2) gemäß einem oder mehreren der Ansprüche 10 bis 11, **dadurch gekennzeichnet, dass** die Versiegelungsvorrichtung (11) Versiegelungsmittel umfasst, die aus der Gruppe gewählt sind, umfassend:
- eine Laser-Versiegelungsvorrichtung (11a),
- eine Infrarot-Versiegelungsvorrichtung,
- eine Versiegelungsvorrichtung vom Typ mit Siegelstangen (11b),
- eine Ultraschall-Versiegelungsvorrichtung.

13. Die Vorrichtung (1) zur Herstellung eines schlauchartigen Etiketts (2) gemäß einem oder mehreren der Ansprüche 10 bis 12, **dadurch gekennzeichnet, dass** sie Druckvorrichtungsmittel (30) umfasst, die konstruiert sind, um gegen die äußere Oberfläche des schlauchartigen Etiketts (2) anzuliegen, das um die entsprechende Formspindel (4) gewickelt ist, um eine optimale Haftung zwischen dem ersten länglichen Ende (5a) und dem zweiten länglichen Ende (5b) zu ermöglichen.

14. Die Vorrichtung (1) zur Herstellung eines schlauchartigen Etiketts (2) gemäß einem oder mehreren der Ansprüche 10 bis 13, **dadurch gekennzeichnet, dass** sie zwischen der mindestens einen Abwickelspule (3) und dem Einwickelmittel (7) ein Schneidemittel (14) zum Schneiden eines Endlosfilms (15) von Wärmeschrumpfmaterial umfasst, das von der Abwickelspule (3) zu Bändern der Wärmeschrumpffolie (5) abgewickelt wird,
wobei die Schneidemittel (14) ausgebildet sind, um den Endlosfilm (15) von Wärmeschrumpfmaterial, das von der Abwickelspule (3) abgewickelt wird, nahe entsprechenden im Voraus geleimten Abschnitten (6) zu schneiden.

15. Die Vorrichtung (1) zur Herstellung eines schlauchartigen Etiketts (2) gemäß einem oder mehreren der Ansprüche 10 bis 14, **dadurch gekennzeichnet, dass** der im Voraus geleimte Abschnitt (6) einen im Voraus geleimten Streifen umfasst, der quer zur Richtung der Längsausdehnung (100) des Bandes von Wärmeschrumpffolie (5) und in dem Überlappungsbereich (8), mindestens zwischen dem Verbindungsabschnitt (13) und der freien Kante (5c) des zweiten länglichen Endes (5b), liegt.

16. Die Vorrichtung (1) zur Herstellung eines schlauchartigen Etiketts (2) gemäß einem oder mehreren der Ansprüche 10 bis 15, **dadurch gekennzeichnet, dass** sie einen Stützrahmen für ein Karussell (20) umfasst, der konstruiert ist, um die zu etikettierenden Behälter (10) zu tragen, wobei peripher zu dem Karussell (20) eine Vielzahl von Formspindeln (4) bereitgestellt sind, ausgebildet, um ein entsprechendes schlauchartiges Etikett (2) auf die äußere Oberfläche eines zu etikettierenden Behälters (10) zu übertragen.

## Revendications

1. Procédé de fabrication d'étiquettes (2) de type manchon, comportant :
- une étape consistant à dérouler une bobine débitrice (3) de film thermorétractable, lequel comprend une pluralité de parties préencollées (6) à répartition discontinue dans le sens de déroulage de la bobine débitrice (3) ;
- une étape consistant à séparer au moins une bande de film thermorétractable (5) d'avec ladite bobine débitrice (3), ladite bande de film thermorétractable (5) comprenant au moins une desdites parties préencollées (6) ;
- une étape consistant à faire avancer ladite bande de film thermorétractable (5) jusqu'à un mandrin de façonnage (4) ;
- une étape consistant à envelopper ledit mandrin de façonnage (4) avec ladite bande de film thermorétractable (5) afin de réaliser une étiquette (2) en forme de manchon, une zone de chevauchement (8) étant créée entre une première extrémité longitudinale (5a) de ladite bande de film thermorétractable (5) au contact dudit mandrin de façonnage (4) et la seconde extrémité longitudinale (5b) de ladite bande de film thermorétractable (5), ladite partie préencollée (6) étant disposée au moins partiellement sur une partie de ladite zone de chevauchement (8) ;
- une étape consistant à transférer ladite étiquette (2) en forme de manchon, formée autour dudit mandrin de façonnage (4), dudit mandrin de façonnage (4) à un récipient à étiqueter (10).

2. Procédé de fabrication d'étiquettes (2) de type manchon selon la revendication 1, **caractérisé en ce qu'**il comporte une étape consistant à souder ladite première extrémité longitudinale (5a) à ladite seconde extrémité longitudinale (5b) de ladite bande de film thermorétractable (5) enveloppant ledit mandrin de façonnage (4) pour réaliser une partie de liaison (13) située transversalement par rapport à la direction d'extension longitudinale (100) de ladite bande de film thermorétractable (5) et dans ladite zone de chevauchement (8).

3. Procédé de fabrication d'étiquettes (2) de type manchon selon la revendication 2, **caractérisé en ce que** ladite étape de soudage comprend un soudage par laser, un soudage par infrarouges, un soudage du type à barre de soudage, un dispositif de soudage par ultrasons.

4. Procédé de fabrication d'étiquettes (2) de type manchon selon une ou plusieurs des revendications précédentes, **caractérisé en ce qu'**il comporte, après ladite étape d'enveloppement du mandrin de façonnage (4) par la bande de film thermorétractable (5), une étape consistant à appuyer ladite seconde extrémité longitudinale (5b) contre la première extrémité longitudinale (5a) afin d'assurer une adhérence optimale entre les deux extrémités (5a, 5b) dans ladite zone de chevauchement (8).

5. Procédé de fabrication d'étiquettes (2) de type manchon selon une ou plusieurs des revendications précédentes, **caractérisé en ce que** ladite étape de séparation de ladite bande de film thermorétractable (5) d'avec la bobine débitrice (3) comprend une étape consistant à couper un film continu (15) déroulé depuis ladite bobine débitrice (3).

6. Procédé de fabrication d'étiquettes (2) de type manchon selon la revendication 5, caractérisé en ce ladite étape de coupe est exécutée dans des zones de coupe créées sur ledit film continu (15) déroulé depuis ladite bobine débitrice (3) à proximité des parties préencollées respectives (6), de façon que ladite bande de film thermorétractable (5) séparée d'avec ladite bobine débitrice (3) comprenne ladite partie préencollée (6) à une extrémité longitudinale (5a, 5b) et jusqu'au bord libre (5c) de ladite extrémité longitudinale (5a, 5b).

7. Procédé de fabrication d'étiquettes (2) de type manchon selon une ou plusieurs des revendications précédentes, **caractérisé en ce que** ladite étape de séparation de ladite bande de film thermorétractable (5) d'avec ladite bobine débitrice (3) comprend une opération consistant à séparer ladite bande de film thermorétractable (5) d'avec un substrat continu (3a) déroulé depuis ladite bobine débitrice (3).

8. Procédé de fabrication d'étiquettes (2) de type manchon selon une ou plusieurs des revendications précédentes, **caractérisé en ce que** ladite partie préencollée (6) est obtenue avant le déroulage dudit film continu (15) ou desdites bandes de film thermorétractable (5), supportée sur ladite bobine débitrice (3) par ledit substrat continu (3a), par étalement d'émulsions aqueuses d'adhésifs, de préférence des émulsions aqueuses de polymères acryliques.

9. Procédé de fabrication d'étiquettes (2) de type manchon selon la revendication 8, **caractérisé en ce que** la viscosité desdites émulsions aqueuses d'adhésifs est de 50 à 1000 cP, de préférence de 100 à 500 cP à une température d'application de 0° à 60°C, de préférence de 20°C à 40°C.

10. Dispositif (1) de fabrication d'une étiquette (2) de type manchon, **caractérisé en ce qu'**il comporte au moins une bobine débitrice (3) fournissant à au moins un mandrin de façonnage (4) une bande de film thermorétractable (5) ayant au moins une partie préencollée (6), un moyen de séparation (14) pour séparer au moins une bande de film thermorétractable (5) d'avec ladite bobine débitrice (3), un moyen d'enveloppement (7) pour envelopper la surface latérale (4a) dudit mandrin de façonnage (4) avec ladite bande de film thermorétractable (5) afin de réaliser une étiquette de type manchon, ledit moyen d'enveloppement créant une zone de chevauchement (8) entre une première extrémité longitudinale (5a) de ladite bande de film thermorétractable (5) au contact dudit mandrin de façonnage (4) et la seconde extrémité longitudinale (5b) de ladite bande de film thermorétractable (5), ladite partie préencollée (6) étant disposée au moins partiellement sur une partie de ladite zone de chevauchement (8), un moyen de transfert (9) pour transférer ladite étiquette (2) de type manchon, formée autour dudit mandrin de façonnage (4), depuis le mandrin de façonnage (4) vers un récipient à étiqueter (10).

11. Dispositif (1) de fabrication d'étiquette (2) de type manchon selon la revendication 10, **caractérisé en ce qu'**il comporte un dispositif (11) pour souder ladite première extrémité longitudinale (5a) à ladite seconde extrémité longitudinale (5b) de ladite bande de film thermorétractable (5) enveloppant ledit mandrin de façonnage (4) pour créer une partie de liaison (13) située transversalement par rapport à la direction d'extension longitudinale (100) de ladite bande de film thermorétractable (5) et dans ladite zone de chevauchement (8).

12. Dispositif (1) de fabrication d'étiquette (2) de type manchon selon une ou plusieurs des revendications 10 et 11, **caractérisé en ce que** ledit dispositif de soudage (11) comprend des moyens de soudage choisis parmi :
- un dispositif de soudage par laser (11a) ;
- un dispositif de soudage par infrarouges ;
- un dispositif de soudage (11b) du type à barre de soudage ;
- un dispositif de soudage par ultrasons.

13. Dispositif (1) de fabrication d'étiquette (2) de type manchon selon une ou plusieurs des revendications 10 à 12, **caractérisé en ce qu'**il comprend un moyen d'appui (30) conçu pour venir contre la surface extérieure de ladite étiquette (2) de type manchon enveloppant le mandrin de façonnage respectif (4) afin de permettre une adhérence optimale entre la première extrémité longitudinale (5a) et la seconde extrémité longitudinale (5b).

14. Dispositif (1) de fabrication d'étiquette (2) de type manchon selon une ou plusieurs des revendications 10 à 13, **caractérisé en ce qu'**il comporte, entre ladite au moins une bobine débitrice (3) et ledit moyen d'enveloppement (7), un moyen de coupe (14) pour couper en bandes de film thermorétractable (5) un film continu (15) en matériau thermorétractable déroulé depuis ladite bobine débitrice (3), ledit moyen de coupe (14) étant apte à couper ledit film continu (15) en matériau thermorétractable déroulé depuis ladite bobine débitrice (3) à proximité des parties préencollées respectives (6).

15. Dispositif (1) de fabrication d'étiquette (2) de type manchon selon une ou plusieurs des revendications 10 à 14, caractérisé en ce ladite partie préencollée (6) comprend un ruban préencollé situé transversalement par rapport à la direction d'extension longitudinale (100) de ladite bande de film thermorétractable (5) et se trouve dans ladite zone de chevauchement (8) au moins entre ladite partie de liaison (13) et le bord libre (5c) de ladite seconde extrémité longitudinale (5b).

16. Dispositif (1) de fabrication d'étiquette (2) de type manchon selon une ou plusieurs des revendications 10 à 15, **caractérisé en ce qu'**il comporte un bâti de support pour un carrousel (20) conçu pour supporter lesdits récipients à étiqueter (10), une pluralité de mandrins de façonnage (4) étant présents sur le pourtour dudit carrousel (20) et aptes à transférer une étiquette respective (2) de type manchon jusque sur la surface extérieure d'un récipient à étiqueter (10).
